# EUROPÄISCHE PATENTSCHRIFT

(11) **EP 2 041 404 B1**
(45) Veröffentlichungstag und Bekanntmachung des Hinweises auf die Patenterteilung: **06.11.2013**
(21) Anmeldenummer: 07765737.7
(22) Anmeldetag: 29.06.2007
(51) Int. Cl.: F01L 1/344, F16K 11/07

(54) **HYDRAULISCHES STEUERVENTIL**
HYDRAULIC CONTROL VALVE
SOUPAPE DE COMMANDE HYDRAULIQUE

(30) Priorität: 08.07.2006 DE 102006031595
(43) Veröffentlichungstag der Anmeldung: 01.04.2009
(73) Patentinhaber: Schaeffler Technologies AG & Co. KG, 91074 Herzogenaurach (DE)
(72) Erfinder: HOPPE, Jens, 91056 Erlangen (DE); KONIAS, Stefan, 90419 Nürnberg (DE)
(86) Internationale Anmeldenummer: PCT/EP2007/056568
(87) Internationale Veröffentlichungsnummer: WO 2008/006717

(56) Entgegenhaltungen:
- EP-A2- 0 289 770
- DE-A1-102004 038 160
- GB-A- 865 422
- GB-A- 1 281 367
- US-A1- 2003 121 486

## Beschreibung

### Gebiet der Erfindung

Die Erfindung betrifft ein hydraulisches Steuerventil zur Steuerung von Druckmittelströmen.

In modernen Brennkraftmaschinen werden hydraulische Steuerventile, insbesondere Proportionalventile in Wege-Schieberventilausführung, für die Steuerung einer Vielzahl von hydraulischen Verbrauchern eingesetzt. Das Steuerventil besteht aus einem im Wesentlichen hohlzylindrisch ausgebildeten Ventilgehäuse und einem darin angeordneten, axial verschiebbaren Steuerkolben. Dabei wird dem Steuerventil über zumindest einen Zulaufanschluss Druckmittel zugeführt. Das Steuerventil verfügt weiterhin über einen oder mehrere Versorgungsanschlüsse, die mit dem Verbraucher hydraulisch verbunden sind. Des Weiteren ist wenigstens ein Ablaufanschluss vorgesehen, über den Druckmittel aus dem Steuerventil in einen Tank abgeführt werden kann.
Abhängig von der Stellung des Steuerkolbens relativ zum Ventilgehäuse, wird einem oder mehreren Versorgungsanschlüssen Druckmittel zugeführt oder von diesen in den Tank abgeführt.

Ein von einem Steuerventil angesteuerter Verbraucher ist beispielsweise eine Vorrichtung zur variablen Einstellung der Steuerzeiten von Gaswechselventilen einer Brennkraftmaschine (Nockenwellenversteller). Nockenwellenversteller werden eingesetzt, um die Phasenrelation zwischen Kurbelwelle und Nockenwelle einer Brennkraftmaschine in einem definierten Winkelbereich, zwischen einer maximalen Früh- und einer maximalen Spätposition, variabel gestalten zu können. Zu diesem Zweck ist die Vorrichtung in einen Antriebsstrang integriert, über welchen Drehmoment von der Kurbelwelle auf die Nockenwelle übertragen wird. Dieser Antriebsstrang kann beispielsweise als Riemen-, Ketten- oder Zahnradtrieb realisiert sein.

Derartige Vorrichtungen umfassen zumindest zwei gegeneinander verdrehbare Rotoren, wobei ein Rotor in Antriebsverbindung mit der Kurbelwelle steht und der andere Rotor drehfest mit der Nockenwelle verbunden ist. Die Vorrichtung umfasst zumindest einen Druckraum, welcher mittels eines bewegbaren Elementes in zwei gegeneinander wirkende Druckkammern unterteilt wird. Das bewegliche Element steht mit mindestens einem der Rotoren in Wirkverbindung. Durch Druckmittelzufuhr zu bzw. Druckmittelabfuhr von den Druckkammern wird das bewegliche Element innerhalb des Druckraums verschoben, wodurch eine gezielte Verdrehung der Rotoren zueinander und somit der Nockenwelle zur Kurbelwelle bewirkt wird.

Der Druckmittelzufluss zu, bzw. der Druckabfluss von den Druckkammern wird mittels eines hydraulischen Steuerventils gesteuert. Dabei sind an dem Steuerventil zwei Versorgungsanschlüsse (Arbeitsanschlüsse) ausgebildet, von denen jeder mit einer Druckkammer jedes Druckraums kommuniziert.
Das Steuerventil wird mittels eines Reglers gesteuert, welcher mit Hilfe von Sensoren die Ist- und Sollposition der Nockenwelle der Brennkraftmaschine bestimmt und miteinander vergleicht. Wird ein Unterschied zwischen beiden Positionen festgestellt, wird ein Signal an den Regler gesandt, welcher die Position des Steuerkolbens relativ zum Ventilgehäuse des Steuerventils dem Signal anpasst und so die Druckmittelströme zu den Druckkammern regelt.

Um die Funktion der Vorrichtung zu gewährleisten, muss der Druck im Druckmittelkreislauf der Brennkraftmaschine einen bestimmten Wert übersteigen. Da das Druckmittel in der Regel von der Ölpumpe der Brennkraftmaschine bereitgestellt wird und der bereitgestellte Druck somit synchron zur Drehzahl der Brennkraftmaschine ansteigt, ist unterhalb einer bestimmten Drehzahl der Öldruck noch zu gering um die Phasenlage der Rotoren gezielt zu verändern bzw. zu halten. Dies kann beispielsweise während der Startphase der Brennkraftmaschine oder während Leerlaufphasen der Fall sein.

Während dieser Phasen würde die Vorrichtung unkontrollierte Schwingungen ausführen, was zu erhöhten Geräuschemissionen, erhöhten Verschleiß, unruhigeren Lauf und erhöhten Rohemissionen der Brennkraftmaschine führt. Um dies zu verhindern können mechanische Verriegelungseinrichtungen vorgesehen sein, die während der kritischen Betriebsphasen der Brennkraftmaschine die beiden Rotoren drehfest miteinander koppeln, wobei diese Koppelung durch Druckmittelbeaufschlagung der Verriegelungseinrichtung aufgehoben werden kann. Dabei hat es sich als vorteilhaft herausgestellt, auf den Verriegelungszustand der Vorrichtung, und damit auf die Druckmittelzufuhr zu bzw. den Druckmittelabfluss von der Verriegelungseinrichtung, unabhängig von Druckverhältnissen in den Druckkammern Einfluss nehmen zu können.
Dies wird mittels eines Steuerventils realisiert, welches zusätzlich zu den zwei Arbeitsanschlüssen, die hydraulisch mit den Druckkammern verbunden sind, einen weiteren Versorgungsanschluss (Steueranschluss) aufweist, welcher mit der Verriegelungseinrichtung kommuniziert.

Eine derartige Vorrichtung und ein derartiges Steuerventil sind beispielsweise aus der US 2003/0121486 A1 bekannt. In dieser Ausführungsform ist die Vorrichtung in Rotationskolbenbauart ausgeführt, wobei ein Außenrotor drehbar auf einem als Flügelrad ausgebildeten Innenrotor gelagert ist. Des Weiteren sind zwei Drehwinkelbegrenzungsvorrichtungen vorgesehen, wobei eine erste Drehwinkelbegrenzungsvorrichtung im eingeriegelten Zustand eine Verstellung des Innenrotors zum Außenrotor in einem Intervall zwischen einer maximalen Spätposition und einer definierten Mittenposition (Verriegelungsposition) erlaubt. Die zweite Drehwinkelbegrenzungsvorrichtung erlaubt im eingeriegelten Zustand eine Verdrehung des Innenrotors zum Außenrotor in einem Intervall zwischen der Mittenposition und der maximalen Frühposition. Befinden sich beide Drehwinkelbegrenzungen im eingeriegelten Zustand so ist die Phasenlage des Innenrotors zum Außenrotor auf die Verriegelungsposition beschränkt. Jede der Drehwinkelbegrenzungsvorrichtungen besteht aus einem federbeaufschlagtem Verriegelungsstift, welcher in einer Aufnahme des Außenrotors angeordnet ist. Jeder Verriegelungsstift wird mittels einer Feder in Richtung des Innenrotors mit einer Kraft beaufschlagt. An dem Innenrotor ist eine Verriegelungsnut ausgebildet, die den Verriegelungsstiften in bestimmten Betriebspositionen der Vorrichtungen gegenübersteht. In diesen Betriebspositionen können die Stifte in die Verriegelungsnut eingreifen. Dabei geht die jeweilige Drehwinkelbegrenzungsvorrichtung vom ent- in den eingeriegelten Zustand über.

Jede der Drehwinkelbegrenzungsvorrichtungen kann durch Druckmittelbeaufschlagung der Verriegelungsnut vom eingeriegelten in den entriegelten Zustand überführt werden. In diesem Fall drängt das Druckmittel die Verriegelungsstifte in deren Aufnahme zurück, wodurch die mechanische Kopplung des Innenrotors zum Außenrotor aufgehoben wird.

Die Druckmittelbeaufschlagung der Druckkammern und der Verriegelungsnuten erfolgt mittels eines Steuerventils, wobei an dem Steuerventil unter anderem zwei Arbeitsanschlüsse, die mit den Druckkammern kommunizieren, und ein Steueranschluss, welcher mit der Verriegelungsnut kommuniziert, ausgebildet sind. Das Steuerventil weist zwei Zulaufanschlüsse auf. Einer der Zulaufanschlüsse ist ausschließlich mit dem Steueranschluss verbindbar, wohingegen über den anderen Zulaufanschluss Druckmittel ausschließlich zu den Arbeitsanschlüssen gelangen kann. Nachteilig wirkt sich in dieser Ausführungsform der hohe Bauraumbedarf des Steuerventils auf Grund der Vielzahl von Anschlüssen aus. Die Ausführungsform entspricht zwei in Reihe angeordneten Steuerventilen, die über einen gemeinsamen Steuerkolben verfügen. Diese Bauweise schränkt die Möglichkeiten der darstellbaren Steuerlogiken im Vergleich zu zwei separaten Steuerventilen erheblich ein. Flexiblere bzw. komplexere Steuerlogiken, vor allem hinsichtlich des Steueranschlusses, können nur mit erheblichen negativen Folgen für den Bauraumbedarf des Steuerventils dargestellt werden.

### Zusammenfassung der Erfindung

Der Erfindung liegt die Aufgabe zugrunde ein bauraumoptimiertes Steuerventil zu schaffen, welches den Druckmittelfluss zu bzw. von mehreren Versorgungsleitungen über mehrere Versorgungsanschlüsse steuern kann, wobei die vorgeschlagene Ausführungsform einen hohen Grad an Freiheit bei der Umsetzung verschiedenster Steuerlogiken aufweisen soll.

In einer ersten Ausführungsform eines hydraulischen Steuerventils mit einem im Wesentlichen hohlzylindrisch ausgebildeten Ventilgehäuse, an dem mindestens ein Zulaufanschluss, mindestens ein Ablaufanschluss, und mindestens zwei Versorgungsanschlüsse ausgebildet sind, und einem innerhalb des Ventilgehäuses angeordneten, axial zu diesem verschiebbaren Steuerkolben, wobei an einer im Wesentlichen zylinderförmigen Mantelfläche eines der beiden Bauteile innerhalb eines ersten, sich in axialer und Umfangsrichtung erstreckenden Bereichs erste Steuerelemente und innerhalb eines zweiten, sich in axialer und Umfangsrichtung erstreckenden Bereichs zweite Steuerelemente ausgebildet sind, wobei an dem anderen Bauteil Gegensteuerelemente ausgebildet sind, wobei die ersten Steuerelemente mit den Gegensteuerelementen derart zusammenwirken, dass, abhängig von der axialen Stellung der Bauteile zueinander, ein Druckmittelstrom zwischen dem ersten Versorgungsanschluss und dem Inneren des Ventilgehäuses gesteuert wird, wobei die zweiten Steuerelemente mit den Gegensteuerelementen derart zusammenwirken, dass, abhängig von der axialen Stellung der Bauteile zueinander, ein Druckmittelstrom zwischen dem zweiten Versorgungsanschluss und dem Inneren des Ventilgehäuses gesteuert wird, wird die Aufgabe erfindungsgemäß dadurch gelöst, dass der erste und der zweite Bereich in axialer Richtung zumindest teilweise überlappend angeordnet sind. Dabei kann vorgesehen sein, dass der erste Bereich sich in Umfangsrichtung des Steuerventils innerhalb eines ersten Winkelbereichs erstreckt und dass der zweite Bereich sich in Umfangsrichtung des Steuerventils innerhalb eines zweiten Winkelbereichs erstreckt, wobei die Bereiche sich in Umfangsrichtung nicht überlappen.

Das Steuerventil umfasst in dieser Ausführungsform zumindest ein im Wesentlichen hohlzylindrisch ausgeführtes Ventilgehäuse und einen darin axial verschiebbar angeordneten Steuerkolben. Der Steuerkolben kann mittels einer Stelleinheit, beispielsweise einer elektromagnetischen oder hydraulischen Steileinheit, in eine beliebige Position zwischen zwei Maximalwerten verschoben und gehalten werden. Dabei kann die Stelleinheit mit dem Steuerventil verbunden oder ortsfest zu diesem angeordnet sein.
An dem Ventilgehäuse sind ein Zulaufanschluss und zumindest ein Ablaufanschluss ausgebildet. Über den Zulaufanschluss gelangt Druckmittel in den Hohlraum innerhalb des Ventilgehäuses. Über den Ablaufanschluss kann Druckmittel aus dem Inneren des Ventilgehäuses abfließen. Des Weiteren sind mehrere, zumindest zwei, Versorgungsanschlüsse ausgebildet, die über Versorgungsleitungen mit einem oder mehreren Verbrauchern, beispielsweise einer Vorrichtung zur variablen Einstellung der Steuerzeiten von Gaswechselventilen einer Brennkraftmaschine, kommunizieren.
Die Anschlüsse können beispielsweise als Nuten ausgeführt sein, welche an einer Außenmantelfläche des Ventilgehäuses ausgebildet sind, und über radiale Öffnungen mit dem Inneren des Ventilgehäuses kommunizieren. Alternativ können auch die radialen Öffnungen als Anschlüsse dienen. Ebenso denkbar ist es eine axiale Öffnung des Ventilgehäuses als Anschluss, beispielsweise als Zu-oder Ablaufanschluss, zu nutzen.
Zur Steuerung der Druckmittelströme sind an dem Steuerkolben oder dem Ventilgehäuse Steuerelemente und an dem anderen Bauteil Gegensteuerelemente ausgebildet. Diese wirken derart zusammen, dass abhängig von der Stellung des Steuerkolbens zum Ventilgehäuse die verschiedenen Versorgungsanschlüsse nicht mit dem Inneren des Ventilgehäuses oder mit druckmittelführenden oder drucklosen Bereichen des Inneren des Ventilgehäuses kommunizieren können. Dabei sind zur Steuerung des ersten Versorgungsanschlusses erste Steuerelemente und zur Steuerung des zweiten Versorgungsanschlusses zweite Steuerelemente vorgesehen. Vorteilhafterweise überlappen sich die Bereiche, in denen die ersten bzw. die zweiten Steuerelemente ausgebildet sind in axialer Richtung zumindest teilweise, wodurch der axiale Bauraumbedarf bei gegebener Steuerlogik minimiert werden kann.
Um bei einer oder mehreren axialen Positionen des Steuerkolbens relativ zum Ventilgehäuse die Druckmittelflüsse zu den verschiedenen Versorgungsanschlüssen unterschiedlich gestalten zu können, kann vorgesehen sein, dass der erste Bereich sich in Umfangsrichtung des Steuerventils innerhalb eines ersten Winkelbereichs erstreckt und dass der zweite Bereich sich in Umfangsrichtung des Steuerventils innerhalb eines zweiten Winkelbereichs erstreckt, wobei die Bereiche sich in Umfangsrichtung nicht überlappen.
Dadurch wird erreicht, dass die Druckmittelströme zu den verschiedenen Versorgungsanschlüsse, im Unterschied zum Stand der Technik, nicht axial zueinander versetzt fließen sondern parallel zueinander in in Umfangsrichtung voneinander getrennten Sektoren des Steuerventils. Statt einer Reihenanordnung liegt eine bauraumsparende Parallelanordnung vor.
Ein zusätzlicher Vorteil dieser Sektorisierung der Druckmittelströme liegt darin, dass auch komplexere Steuerlogiken dargestellt werden können und diese sogar ohne zusätzlichen Bauraumbedarf. Dieser Vorteil kommt vor allem bei mehr als zwei Versorgungsanschlüssen zum Tragen. Beispielsweise können in Fällen mit drei Versorgungsanschlüssen für einen der Versorgungsanschlüsse die Steuerelemente im gesamten axialen Bereich, den die beiden anderen Versorgungsanschlüsse einnehmen, ausgebildet werden. Die Anzahl der Steuerelemente kann so ohne höheren Bauraumbedarf erhöht werden, wodurch auch komplexere Schaltlogiken darstellbar sind.

In einer Konkretisierung der Erfindung ist vorgesehen die Steuerelemente an dem Ventilgehäuse auszubilden. Dabei kann vorgesehen sein, dass die Steuerelemente an einer Innenmantelfläche des Ventilgehäuses ausgebildet sind. Somit kann der Steuerkolben rotationssymmetrisch ausgebildet werden. Dadurch kann das das Steuerventil auch in Anwendungen eingesetzt werden, in denen der Steuerkolben relativ zum Ventilgehäuse rotiert. Dies ist beispielsweise in Anwendungen der Fall, in denen die Stelleinheit nicht fest mit dem Steuerventil verbunden ist und das Steuerventil innerhalb einer Zentralbohrung eines rotierenden Bauteils, beispielsweise eines Innenrotors eines Nockenwellenverstellers, angeordnet ist.
In einer vorteilhaften Weiterbildung der Erfindung ist vorgesehen, dass die ersten Steuerelemente mit den Gegensteuerelementen derart zusammenwirken, dass, abhängig von der axialen Stellung der Bauteile zueinander, ausschließlich ein Druckmittelstrom zwischen dem ersten Versorgungsanschluss und dem Inneren des Ventilgehäuses gesteuert wird. Ebenso kann vorgesehen sein, dass die zweiten Steuerelemente mit den Gegensteuerelementen derart zusammenwirken, dass, abhängig von der axialen Stellung der Bauteile zueinander, ausschließlich ein Druckmittelstrom zwischen dem zweiten Versorgungsanschluss und dem Inneren des Ventilgehäuses gesteuert wird.

In einer weiteren Ausführung eines hydraulischen Steuerventils mit einem im Wesentlichen hohlzylindrisch ausgebildeten Ventilgehäuse, an dem mindestens zwei Versorgungsanschlüssen, mindestens einem Zulaufanschluss und mindesten einem Ablaufanschluss ausgebildet sind, wird die Aufgabe erfindungsgemäß dadurch gelöst, dass mindestens zwei der Anschlüsse in axialer Richtung des Ventilgehäuses zumindest teilweise überlappend angeordnet sind.
In einer Konkretisierung der Erfindung ist vorgesehen, dass die Versorgungsanschlüsse in axialer Richtung des Ventilgehäuses zumindest teilweise überlappend angeordnet sind.
In einer vorteilhaften Weiterbildung der Erfindung ist vorgesehen, dass sich die in axialer Richtung überlappenden Anschlüsse in Umfangsrichtung des Ventilgehäuses nicht überlappen.

In einer Konkretisierung der Erfindung ist vorgesehen, dass die sich in axialer Richtung überlappenden Anschlüsse in Umfangsrichtung des Ventilgehäuses mittels Sperrelementen hydraulisch voneinander getrennt sind.
Dabei kann vorgesehen sein, die Sperrelementen einteilig mit dem Ventilgehäuse auszubilden.
Durch die teilweise Überlappung der Anschlüsse in axialer Richtung kann der axiale Bauraumbedarf des Steuerventils auf ein Minimum reduziert werden. Die Anschlüsse, neben den Versorgungsanschlüssen auch die Zulauf- und oder Ablaufanschlüsse, können in axialer Richtung dichter gepackt werden, wodurch das Steuerventil auch in kompakteren Umgebungskonstruktionen oder Verbrauchern zum Einsatz kommen kann.

In einer weiteren Ausführung eines hydraulischen Steuerventils mit einem im Wesentlichen hohlzylindrisch ausgebildeten Ventilgehäuse und einem darin axial verschiebbar angeordneten, im Wesentlichen hohlzylindrisch ausgebildeten Steuerkolben, wobei an dem Ventilgehäuse mindestens ein Zulaufanschluss (P) und mindestens zwei Versorgungsanschlüsse ausgebildet sind, wobei über den Zulaufanschluss dem Inneren des Ventilgehäuses Druckmittel zugeführt werden kann, wird die erfindungsgemäße Aufgabe dadurch gelöst, dass dem ersten Versorgungsanschluss Druckmittel über das Innere des Steuerkolbens und dem zweiten Versorgungsanschluss Druckmittel über eine Druckmittelleitung, welche zwischen einer Außenmantelfläche des Steuerkolbens und einer Innenmantelfläche des Ventilgehäuses ausgebildet ist, zugeführt werden kann. Dabei kann vorgesehen sein den Steuerkolben einteilig auszubilden. Alternativ kann der der Steuerkolben aus mehreren separaten Bauteilen bestehen.

### Kurze Beschreibung der Zeichnungen

Weitere Merkmale der Erfindung ergeben sich aus der nachfolgenden Beschreibung und aus den Zeichnungen in denen Ausführungsbeispiele der Erfindung vereinfacht dargestellt sind. Es zeigen:
- Figur 1: eine erfindungsgemäße Ausführungsform eines Steuerventils in perspektivischer Ansicht,
- Figur 2: einen Teillängsschnitt durch das Steuerventil nach Figur 1,
- Figur 3a: einen Längsschnitt durch einen Abschnitt des Steuerventils nach Figur 2,
- Figur 3b: einen Querschnitt durch das Steuerventil nach Figur 3a entlang der Linie B - B,
- Figur 3c: einen Querschnitt durch das Steuerventil nach Figur 3a entlang der Linie C - C,
- Figur 4: einen Querschnitt durch einen Nockenwellenversteller inklusive einem angeschlossenen Hydraulikkreislauf,
- Figur 5: eine, durch das erfindungsgemäße Steuerventil nach Figur 2 realisierte Steuerlogik,
- Figur 6a-6g: je eine Darstellung des Steuerventils nach Figur 3a in dessen verschiedenen Steuerstellungen,
- Figur 7a-7e: je einen Längsschnitt durch einen Abschnitt einer weiteren erfindungsgemäßen Ausführungsform eines Steuerventils in dessen verschiedenen Steuerstellungen,
- Figur 8a: einen Querschnitt durch das Steuerventil nach Figur 7a entlang der Linie A - A,
- Figur 8b: einen Querschnitt durch das Steuerventil nach Figur 7a entlang der Linie B - B,
- Figur 8c: einen Querschnitt durch das Steuerventil nach Figur 7a entlang der Linie C - C.

### Ausführliche Beschreibung der Zeichnungen

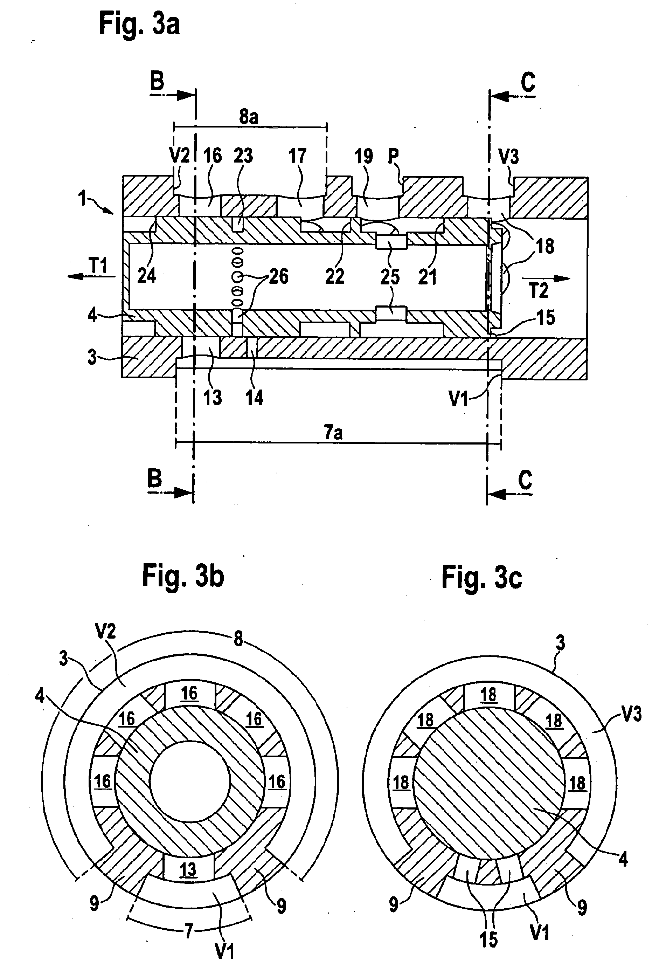

Im Folgenden wird die Erfindung anhand eines Steuerventils 1 mit drei Versorgungsanschlüssen beschrieben. Ebenso denkbar wären Ausführungsformen mit 2 oder mehr als drei Versorgungsanschlüssen.

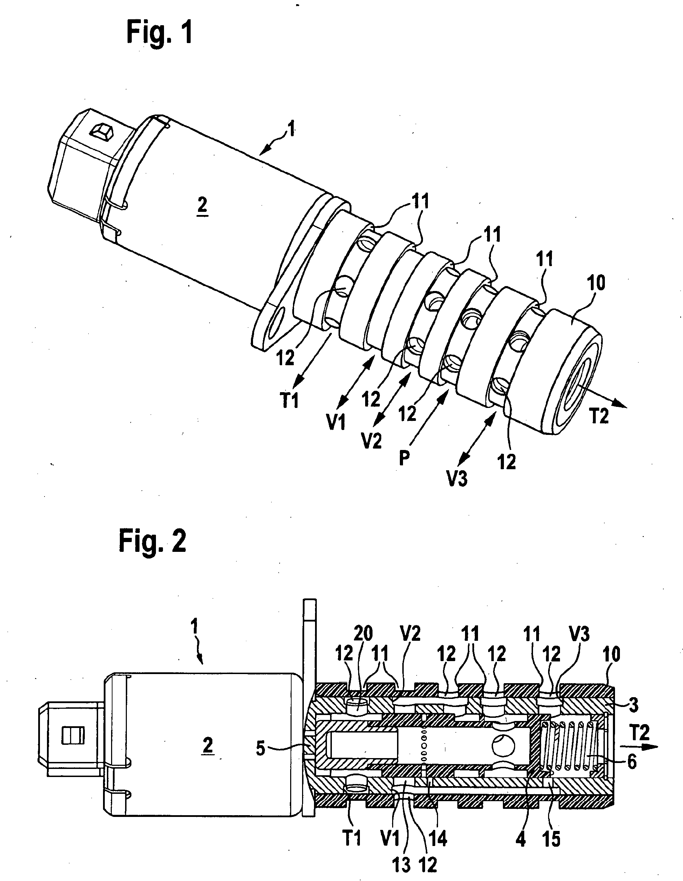

Die Figuren 1 und 2 zeigen eine erste Ausführungsform eines erfindungsgemäßen Steuerventils 1. Dieses umfasst eine elektromagnetische Stelleinheit 2, ein Ventilgehäuse 3 und einen Steuerkolben 4. Der im Wesentlichen hohlzylindrisch ausgebildete Steuerkolben 4 ist axial verschiebbar innerhalb des ebenfalls im Wesentlichen hohlzylindrisch ausgeführten Ventilgehäuses 3 angeordnet. Dabei ist der Außendurchmesser des Steuerkolbens 4 im Wesentlichen dem Innendurchmesser des Ventilgehäuses 3 angepasst. Mittels einer Stößelstange 5, kann eine Bewegung eines nicht dargestellten Ankers der Stelleinheit 2 auf den Steuerkolben 4 übertragen werden, wodurch dieser gegen die Kraft eines Federelementes 6 in axialer Richtung positioniert werden kann. An dem Ventilgehäuse 3 sind drei Versorgungsanschlüsse V1, V2, V3, ein Zulaufanschluss P, ein radialer und ein axialer Ablaufanschluss T1, T2 ausgebildet. Die Versorgungsanschlüsse V1, V2, V3, der Zulaufanschluss P und der radiale Ablaufanschluss T1 sind als Nuten in einer äußeren Mantelfläche des Ventilgehäuses 3 ausgebildet, welche sich in Umfangsrichtung erstrecken. Der zweite und dritte Versorgungsanschluss V2, V3, der Zulaufanschluss P und der radiale Ablaufanschluss T1 sind axial zueinander versetzt angeordnet, während sich der erste Versorgungsanschluss V1 in axialer Richtung entlang der gesamten Länge des von den anderen Versorgungsanschlüsse V2, V3, und dem Zulaufanschluss P eingenommenen Bereichs erstreckt. Der axiale Ablaufanschluss T2 ist als axiale Öffnung des Ventilgehäuses 3 ausgebildet
Der erste Versorgungsanschluss V1 erstreckt sich in Umfangsrichtung innerhalb eines ersten Winkelbereichs 7 und in axialer Richtung innerhalb eines ersten Bereichs 7a. Der zweite und dritte Versorgungsanschluss V2, V3 und der Zulaufanschluss P erstrecken sich in Umfangsrichtung innerhalb eines zweiten Winkelbereichs 8, wobei sich der zweite Versorgungsanschluss V2 in axialer Richtung innerhalb eines zweiten Bereichs 8a erstreckt. Dabei sind die Winkelbereiche 7, 8 in Umfangsrichtung des Steuerventils 1 nicht überlappend angeordnet und mittels Sperrelementen 9 hydraulisch voneinander getrennt (Figuren 3a bis 3c). Der erste und der zweite Bereich 7a, 8a sind vorteilhafterweise zumindest teilweise überlappend angeordnet. In der dargestellten Ausführungsform wird der zweite Bereich 8a komplett vom ersten Bereich 7a überdeckt. Des Weiteren ist in der dargestellten Ausführungsform eine hohlzylindrisch ausgeführte Adapterhülse 10 vorgesehen, die das Ventilgehäuse 3 umfasst. Dabei ist der Außendurchmesser des Ventilgehäuses 3 im Wesentlichen dem Innendurchmesser der Adapterhülse 10 angepasst. Mittels der Adapterhülse 10 kann eine Verbindung zwischen den Anschlüssen P, T1, T2, V1, V2, V3 und nicht dargestellten Verbindungsleitungen einer Umgebungskonstruktion, beispielsweise einer Aufnahme in einem Zylinderkopf oder Zylinderkopfdeckel hergestellt werden. Zu Diesem Zweck sind an der Außenmantelfläche der Adapterhülse 10 fünf axial zueinander versetzt angeordnete in Umfangsrichtung umlaufende Nuten 11 ausgebildet, welche jeweils über radiale Hülsenöffnungen 12 mit einem der Anschlüsse P, T1, V1, V2, V3 kommunizieren. Dabei sind die Hülsenöffnungen 12 jeder Nut 11 in Umfangsrichtung nur in dem Winkelbereich 7, 8 des korrespondierenden Anschlusses P, T1, V1, V2, V3 ausgebildet. Der Vorteil dieser Ausführungsform mit Adapterhülse 10 liegt darin, dass während des Einbaus des Steuerventils 1 keine definierte Einbauorientierung des Steuerventils 1 relativ zu den Verbindungsleitungen eingehalten werden muss, da das Druckmittel in jeder Lage des Steuerventils 1 über die Nuten 11 zu den jeweiligen Verbindungsleitungen gelangen kann. Ebenso denkbar sind aber auch Ausführungsformen des Steuerventils 1 ohne Adapterhülse 10, in denen die Außenmantelfläche des Steuerkolbens 4 direkt an der Ventilaufnahme zum Anliegen kommt. Im Folgenden wird die Erfindung anhand einer derartigen Ausführungsform, die in den Figuren 3a bis 3c dargestellt ist, erläutert.
In Figur 3a ist der Teil des erfindungsgemäßen Steuerventils 1 dargestellt an dem der Zulaufanschluss P und die Versorgungsanschlüsse V1-V3 ausgebildet sind. Im Unterschied zu Figur 2 ist hier der Steuerkolben 4 einteilig ausgebildet. An dem Ventilgehäuse 3 sind acht Gruppen von radialen Gehäuseöffnungen 13-20 ausgebildet. Die ersten bis dritten Gehäuseöffnungen 13-15 sind ausschließlich in dem ersten Versorgungsanschluss V1 ausgebildet und axial zueinander versetzt angeordnet. Die vierten und fünften Gehäuseöffnungen 16, 17 sind ausschließlich in dem zweiten Versorgungsanschluss V2 ausgebildet und ebenfalls axial zueinander versetzt angeordnet. Die sechsten Gehäuseöffnungen 18 sind ausschließlich in dem dritten Versorgungsanschluss V3 ausgebildet. Die siebten Gehäuseöffnungen 19 sind ausschließlich in dem Zulaufanschluss P ausgebildet. Die achten Gehäuseöffnungen 20 sind ausschließlich in dem radialen Ablaufanschluss T1 ausgebildet. Mittels der Gehäuseöffnungen 13-20 kann der jeweilige Anschluss P, T1, V1, V2, V3 mit dem Inneren des Ventilgehäuses 3 kommunizieren.

An einer Außenmantelfläche des Steuerkolbens 4 sind vier axial beabstandete Ringnuten 21- 24 ausgebildet, die sich entlang des gesamten Umfangs des Steuerkolbens 4 erstrecken. Des Weiteren sind an dem Steuerkolben 4 zwei Gruppen von radialen Kolbenöffnungen 25, 26 vorgesehen. Die ersten Kolbenöffnungen 25 sind im Nutgrund der ersten Ringnut 21 und die zweiten Kolbenöffnungen 26 im Nutgrund der dritten Ringnut 23 ausgebildet. Mittels der Kolbenöffnungen 25, 26 kommuniziert die jeweilige Ringnut 21, 23 mit dem Inneren des Steuerkolbens 4.

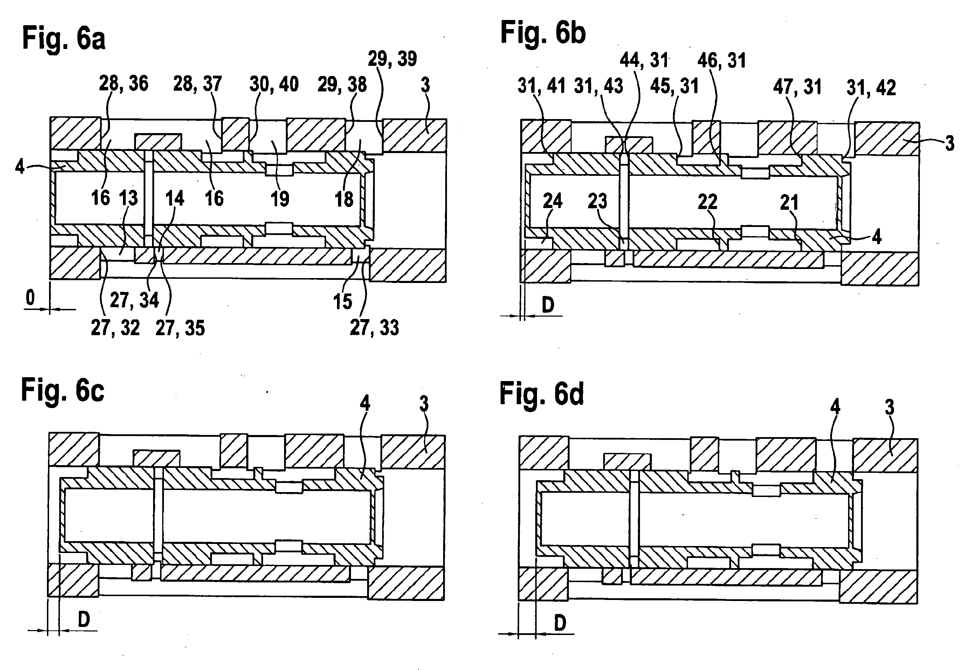

Über den Zulaufanschluss P kann dem Inneren des Ventilgehäuses 3 Druckmittel zugeführt werden. Mittels Steuerelementen und Gegensteuerelementen können Druckmittelströme innerhalb des Steuerventils 1 zwischen verschiedenen Anschlüssen P, T1, T2, V1, V2, V3 etabliert werden.
Dazu sind an einer Innenmantelfläche des Ventilgehäuses 3 erste bis vierte Steuerelemente 27-30 (Figur 6a) und an einer Außenmantelfläche des Steuerkolbens 4 Gegensteuerelemente 31 (Figur 6b) ausgebildet.
Die ersten Steuerelemente 27 umfassen vier Steuerkanten 32-35, wobei die erste und die zweite Steuerkante 32, 33 durch die in axialer Richtung am weitesten voneinander beabstandeten Bereiche der Begrenzungswandungen der ersten und dritten Gehäuseöffnungen 13, 15 definiert sind.
Die dritten und vierten Steuerkanten 34, 35 werden durch die in axialer Richtung am weitesten voneinander beabstandeten Bereiche der Begrenzungswandung der zweiten Gehäuseöffnung 14 definiert.
Die zweiten Steuerelemente 28 umfassen eine fünfte und eine sechste Steuerkante 36, 37, wobei diese durch die in axialer Richtung am weitesten voneinander beabstandeten Bereiche der Begrenzungswandungen der vierten und fünften Gehäuseöffnungen 16, 17 definiert sind.
Die dritten Steuerelemente 29 umfassen eine siebte und eine achte Steuerkante 38, 39, wobei diese durch die in axialer Richtung am weitesten voneinander beabstandeten Bereiche der Begrenzungswandung der sechsten Gehäuseöffnung 18 definiert sind.
Die vierten Steuerelemente 30 umfassen eine neunte Steuerkante 40, wobei diese durch den in axialer Richtung der fünften Gehäuseöffnung 17 am nächsten liegenden Bereich der Begrenzungswandung der siebten Gehäuseöffnung 19 definiert ist.

Die Gegensteuerelemente 31 umfassen sieben Gegensteuerkanten 41-47, wobei die erste Gegensteuerkante 41 durch die axiale Begrenzungswand der vierten Ringnut 24, die zweite Gegensteuerkante 42 durch das federelementseitige Ende des Steuerkolbens 4, die dritte und vierte Gegensteuerkante 43, 44 durch die axialen Begrenzungswände der dritten Ringnut 23, die fünfte und die sechste Gegensteuerkante 45, 46 durch die axialen Begrenzungswände der zweiten Ringnut 22 und die siebte Gegensteuerkante 47 durch die der zweiten Ringnut 22 abgewandten axialen Begrenzungswand der ersten Ringnut 21 definiert sind.

Die ersten Steuerelemente 27 sind ausschließlich im ersten Winkelbereich 7 ausgebildet. Die zweiten bis vierten Steuerelemente 28-30 sind ausschließlich im zweiten Winkelbereich 8 ausgebildet. Die Gegensteuerelemente 31 erstrecken sich entlang des gesamten Umfangs des Steuerkolbens 4.

In diesem Ausführungsbeispiel sind die Steuerelemente 27-30 an einer Innenmantelfläche des Ventilgehäuses 3 und die Gegensteuerelemente 31 an der Außenmantelfläche des Steuerkolbens 4 ausgebildet. Denkbar sind aber auch Alternativlösungen mit genau entgegengesetzter Konfiguration.

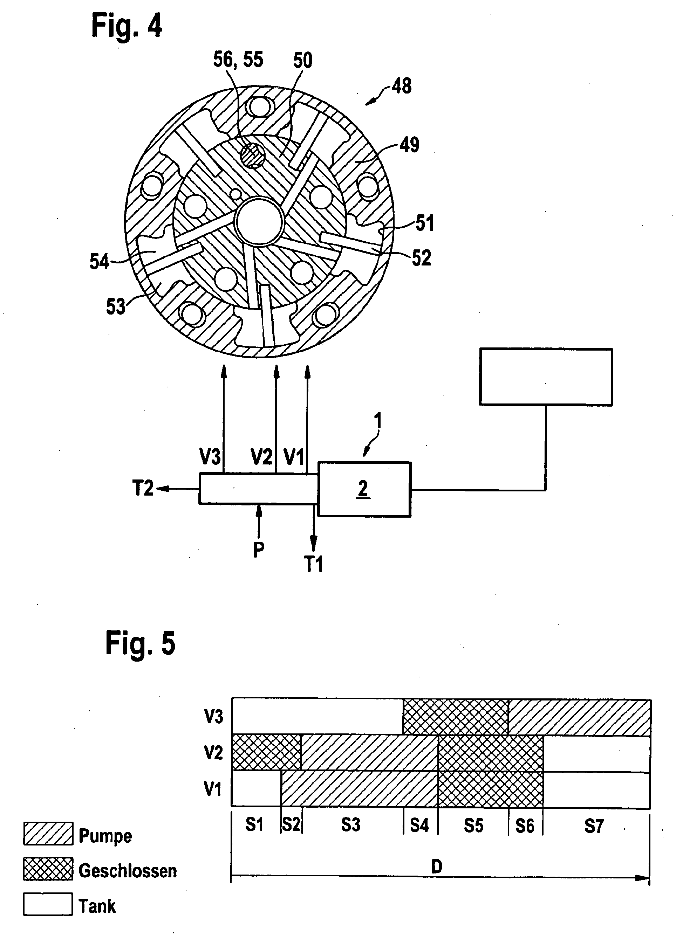

Anhand des Beispiels eines in Figur 4 dargestellten Nockenwellenverstellers 48 wird im Folgenden die Funktion des Steuerventils 1 erläutert.
Der Nockenwellenversteller 48 weist einen Außenrotor 49, einen Innenrotor 50 und zwei nicht dargestellte Seitendeckel auf. Der Außenrotor 49 steht, beispielsweise mittels eines Zugmitteltriebs, in Antriebsverbindung mit einer nicht dargestellten Kurbelwelle. Der Innenrotor 50 ist in Form eines Flügelrades ausgeführt und drehfest mit einer ebenfalls nicht dargestellten Nockenwelle verbunden. Ausgehend von einer äußeren Umfangswand des Außenrotors 49 erstrecken sich mehrere Vorsprünge radial nach innen, mittels derer der Außenrotor 49 relativ zu dem Innenrotor 50 drehbar auf diesem gelagert ist. Je einer der Seitendeckel ist an einer der axialen Seitenflächen des Außenrotors 49 angeordnet und drehfest an diesem fixiert. Innerhalb des Nockenwellenverstellers 48 ist zwischen jeweils zwei in Umfangsrichtung benachbarten Vorsprüngen ein Druckraum 51 ausgebildet, der in Umfangsrichtung von gegenüberliegenden, im Wesentlichen radial verlaufenden Begrenzungswänden benachbarter Vorsprünge, in axialer Richtung von den Seitendeckeln, radial nach innen von dem Innenrotor 50 und radial nach außen von dem Außenrotor 49 begrenzt wird. In jeden der Druckräume 51 ragt ein Flügel 52 des Innenrotors 50. Jeder Flügel 52 teilt den jeweiligen Druckraum 51 in zwei gegeneinander wirkende Druckkammern 53, 54.
Durch Druckbeaufschlagung einer Gruppe von Druckkammern 53, 54 und Druckentlastung der anderen Gruppe kann die Phasenlage des Außenrotors 49 zum Innenrotor 50 variiert werden. Durch Druckbeaufschlagung beider Gruppen von Druckkammern 53, 54 kann die Phasenlage der beiden Rotoren 49, 50 zueinander konstant gehalten werden. Alternativ kann vorgesehen sein, keine der Druckkammern 53, 54 während Phasen konstanter Phasenlage mit Druckmittel zu beaufschlagen.

Des Weiteren ist ein Verriegelungsmechanismus 55 vorgesehen, mit dem eine mechanische Verbindung zwischen den beiden Rotoren 49, 50 herstellbar ist. Der Verriegelungsmechanismus 55 umfasst einen axial verlagerbaren Verriegelungsstift 56, der in einer Aufnahme des Innenrotors 50 angeordnet ist. Der Verriegelungsstift 56 wird mittels einer nicht dargestellten Feder mit einer Kraft in Richtung eines der Seitendeckel beaufschlagt, in dem eine nicht dargestellte Verriegelungskulisse ausgebildet ist. Befindet sich der Innenrotor 50 in einer definierten Phasenlage (Verriegelungsposition) zum Außenrotor 49, so kann der Verriegelungsstift 56 in die Kulisse eingreifen und somit eine mechanische drehfeste Verbindung zwischen den beiden Rotoren 49, 50 herstellen.
Um den Verriegelungsmechanismus 55 von dem eingeriegelten in den entriegelten Zustand zu überführen, ist vorgesehen, dass die Kulisse mit Druckmittel beaufschlagt wird. Dadurch wird der Verriegelungsstift 56 entgegen der Kraft der Feder in die Aufnahme zurückgedrängt und somit die mechanische Verriegelung aufgehoben.

Zur Druckmittelzufuhr zu bzw. Druckmittelabfuhr von den Druckkammern 53, 54 und der Kulisse ist das Steuerventil 1 vorgesehen. Der erste Versorgungsanschluss V1 kommuniziert mit der Kulisse des Verriegelungsmechanismus 55. Der zweite Versorgungsanschluss V2 kommuniziert mit den ersten Druckkammern 53. Der dritte Versorgungsanschluss V3 kommuniziert mit den zweiten Druckkammern 54. Der Zulaufanschluss P kommuniziert mit einer nicht dargestellten Druckmittelquelle und die Ablaufanschlüsse T1, T2 mit einem ebenfalls nicht dargestellten Tank.

Für den Betrieb des Nockenwellenverstellers 48 hat sich die in Figur 5 dargestellte Steuerlogik als vorteilhaft erwiesen. In Abhängigkeit von der Erregung der Stelleinheit 2 bzw. eines Verschiebeweges D des Steuerkolbens 4 relativ zum Ventilgehäuse 3 durchläuft das Steuerventil 1 in diesem Fall sieben Steuerstellungen. S1-S7 In einer ersten Steuerstellung S1 sind der erste und der dritte Versorgungsanschluss V1, V3 mit einem der Ablaufanschlüsse T1, T2 verbunden, während der zweite Versorgungsanschluss V2 weder mit einem Ablaufanschluss T1, T2 noch dem Zulaufanschluss P verbunden ist. Beim Übergang in die zweite Steuerstellung S2 ist der erste Versorgungsanschluss V1 von den Ablaufanschlüssen T1, T2 getrennt und mit dem Zulaufanschluss P verbunden, der beim Übergang zur dritten Steuerstellung S3 ebenfalls mit dem zweiten Versorgungsanschluss V2 kommuniziert. Beim Übergang in die vierte Steuerstellung S4 ist der dritte Versorgungsanschluss V3 sowohl von den Ablaufanschlüssen T1, T2 als auch von dem Zulaufanschluss P getrennt, während in der fünften Steuerstellung S5 keiner der Versorgungsanschlüsse V1-V3 mit den Ablaufanschlüssen T1, T2 oder dem Zulaufanschluss P kommuniziert. Beim Übergang zur sechsten Steuerstellung S6 wird der dritte Versorgungsanschluss V3 mit dem Zulaufanschluss P verbunden. Beim Übergang in die siebte Steuerstellung S7 werden der erste und der zweite Versorgungsanschluss V1, V2 mit einem der Ablaufanschlüsse T1, T2 verbunden.

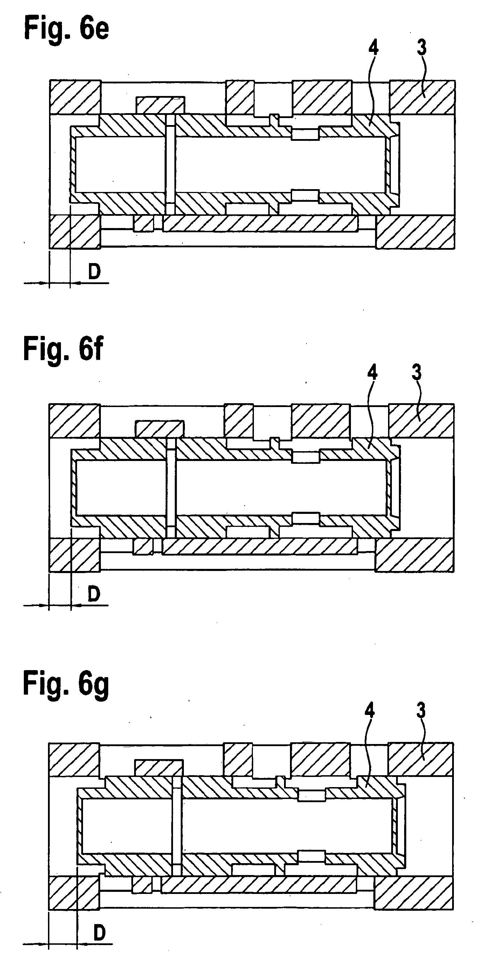

Die verschiedenen Steuerstellungen S1-S7 des Steuerventils 1 sind in den Figuren 6a-6g dargestellt. Im Unterschied zu der in Figur 3a dargestellten Ausführungsform sind der Zulaufanschluss P und der dritte Versorgungsanschluss V3 je als Gehäuseöffnungen 18,19 realisiert. Weiterhin sind der erste und zweite Versorgungsanschluss V1, V2 als axial verlaufende Nuten ausgebildet. Die zweiten Kolbenöffnungen 26 sind hier durch zwei senkrecht verlaufende Linien angedeutet. Der axiale Verschiebweg des Steuerkolbens 4 relativ zum Ventilgehäuse 3 ist mit D bezeichnet, wobei die in Figur 6a dargestellte Konfiguration einem Verschiebeweg D=0 entspricht. Hier nimmt der Steuerkolben 4 eine der maximalen Endstellungen ein.
Über den Zulaufanschluss P kann dem Steuerventil 1 Druckmittel zugeführt werden, welches über die siebten Gehäuseöffnungen 19 in das Innere des Ventilgehäuses 3 gelangt. In allen Steuerstellung S1-S7 gelangt somit Druckmittel in die erste Ringnut 21, über die erste Kolbenöffnung 25 in das Innere des Steuerkolbens 4 und über die zweiten Kolbenöffnungen 26 in die dritte Ringnut 23. In der dritten bis siebten Steuerstellung S3-S7 gelangt zusätzlich Druckmittel in die zweite Ringnut 22.
In Figur 6a ist Steuerventil 1 in der ersten Steuerstellung S1 dargestellt. In dieser Steuerstellung S1 ist die erste, die zweite, die vierte Gehäuseöffnung 13, 14, 16 und die Verbindung zwischen der siebten Gehäuseöffnung 19 und der zweiten Ringnut 22 durch den Steuerkolben 4 blockiert, während die zweite bzw. die achte Steuerkante 33, 39 in Verbindung mit der zweiten Gegensteuerkante 42 eine Verbindung zwischen dem ersten bzw. dem dritten Versorgungsanschluss V1, V3 und dem axialen Ablaufanschluss T2 freigibt.
Druckmittel gelangt somit von dem ersten und dem dritten Versorgungsanschluss V1, V3 zum axialen Ablaufanschluss T2 und weiter in einen nicht dargestellten Tank. Gleichzeitig kommuniziert der zweite Versorgungsanschluss V2 weder mit einem der Ablaufanschlüsse T1, T2 noch mit dem Zulaufanschluss P.
In Figur 6b ist Steuerventil 1 in der zweiten Steuerstellung S2 dargestellt. In dieser Steuerstellung S2 ist die erste, die dritte, die vierte Gehäuseöffnung 13, 15, 16 und die Verbindung zwischen der siebten Gehäuseöffnung 19 und der zweiten Ringnut 22 durch den Steuerkolben 4 blockiert, während die die achte Steuerkante 39 in Verbindung mit der zweiten Gegensteuerkante 42 eine Verbindung zwischen dem dritten Versorgungsanschluss V3 und dem axialen Ablaufanschluss T2 freigibt. Gleichzeitig gibt die dritte Steuerkante 34 in Verbindung mit der vierten Gegendteuerkante 44 eine Verbindung zwischen der zweiten Gehäuseöffnung 14 und der dritten Ringnut 23 frei.
Druckmittel gelangt somit von dem dritten Versorgungsanschluss V3 zum axialen Ablaufanschluss T2, und vom Inneren des Steuerkolbens 4 zum ersten Versorgungsanschluss V1. Gleichzeitig kommuniziert der zweite Versorgungsanschluss V2 weder mit einem der Ablaufanschlüsse T1, T2 noch mit dem Zulaufanschluss P.
Beim Übergang zu der in Figur 6c dargestellten, dritten Steuerstellung S3 des Steuerventils 1 gibt die neunte Steuerkante 40 in Verbindung mit der sechsten Gegensteuerkante 46 eine Verbindung zwischen dem Zulaufanschluss P und der zweiten Ringnut 22 frei, wodurch Druckmittel zwischen der sechsten Steuerkante 37 und der fünften Gegensteuerkante 45 zum zweiten Versorgungsanschluss V2 gelangt.
Beim Übergang zu der in Figur 6d dargestellten, vierten Steuerstellung S4 des Steuerventils 1 wird die sechste Gehäuseöffnung 18 vom Steuerkolben 4 blockiert, wodurch der dritte Versorgungsanschluss V3 weder mit einem der Ablaufanschlüsse T1, T2 noch mit dem Zulaufanschluss P Kommuniziert.
Eine weitere Verschiebung D des Steuerkolbens 4 bewirkt den Übergang zu der in Figur 6e dargestellten, fünften Steuerstellung S5 des Steuerventils 1. Hier werden die zweite und die fünfte Gehäuseöffnung 14, 17 vom Steuerkolben 4 blockiert. Somit kommunizieren die Versorgungsanschlüsse V1, V2, V3 weder mit einem der Ablaufanschlüsse T1, T2 noch mit dem Zulaufanschluss P.
Eine weitere Verschiebung D des Steuerkolbens 4 bewirkt den Übergang zu der in Figur 6f dargestellten, sechsten Steuerstellung S6 des Steuerventils 1. Hier gibt die siebte Steuerkante 38 in Verbindung mit der siebten Gegensteuerkante 47 eine Verbindung zwischen dem dritten Versorgungsanschluss V3 und der ersten Ringnut 21 frei, wodurch Druckmittel vom Zulaufanschluss P zum dritten Versorgungsanschluss V3 gelangt.
Eine weitere Verschiebung D des Steuerkolbens 4 bewirkt den Übergang zu der in Figur 6g dargestellten, siebten Steuerstellung S6 des Steuerventils 1. Hier gibt die erste bzw. die fünfte Steuerkante 32, 36 in Verbindung mit der ersten Gegensteuerkante 41 eine Verbindung zwischen dem ersten bzw. zweiten Versorgungsanschluss V1, V2 und der vierten Ringnut 24 frei, wodurch Druckmittel vom ersten und zweiten Versorgungsanschluss V1, V2 zum radialen Ablaufanschluss T1 gelangt.

In dieser Ausführungsform wird der Druckmittelstrom zu dem ersten Versorgungsanschluss V1, innerhalb des Steuerkolbens 4, parallel zu den Druckmittelströmen zu den anderen Versorgungsanschlüssen V2, V3, in der ersten und zweiten Ringnut 21, 22, geleitet. Sowohl das Innere des Steuerkolbens 4 als auch die erste und zweite Ringnut 21, 22 dienen als Druckmittelleitungen. Statt einer Reihenanordnung der Anschlüsse kann eine parallele Anordnung gewählt werden, wobei eine der Druckmittelleitungen den ersten Versorgungsanschluss V1 mit Druckmittel und die anderen Druckmittelleitungen den zweiten und dritten Versorgungsanschluss V2, V3 mit Druckmittel versorgen kann. Dadurch kann der Bauraumbedarf des Steuerventils 1 signifikant verringert werden.
Des Weiteren ist im Unterschied zu der Ausführungsform im Stand der Technik nur ein Zulaufanschluss P notwendig, wodurch der axiale Bauraumbedarf weiter verringert wird. Durch die Anordnung der Anschlüsse P, V1, V2, V3 in sich axial Überlappenden Bereichen steht, bei geringerem Bauraumbedarf, mehr Platz zur Ausbildung der Steuerelemente 27-30 zur Verfügung. Wodurch auch komplexere Steuerlogiken realisiert werden können. Da die ersten Steuerelemente 27 unabhängig von und entlang des gesamten Bereichs der zweiten bis vierten Steuerelemente 28-30 ausgebildet werden können, können durch geringfügige Modifikationen am Ventilgehäuse 3 eine Vielzahl denkbarer Steuerlogiken verwirklicht werden.

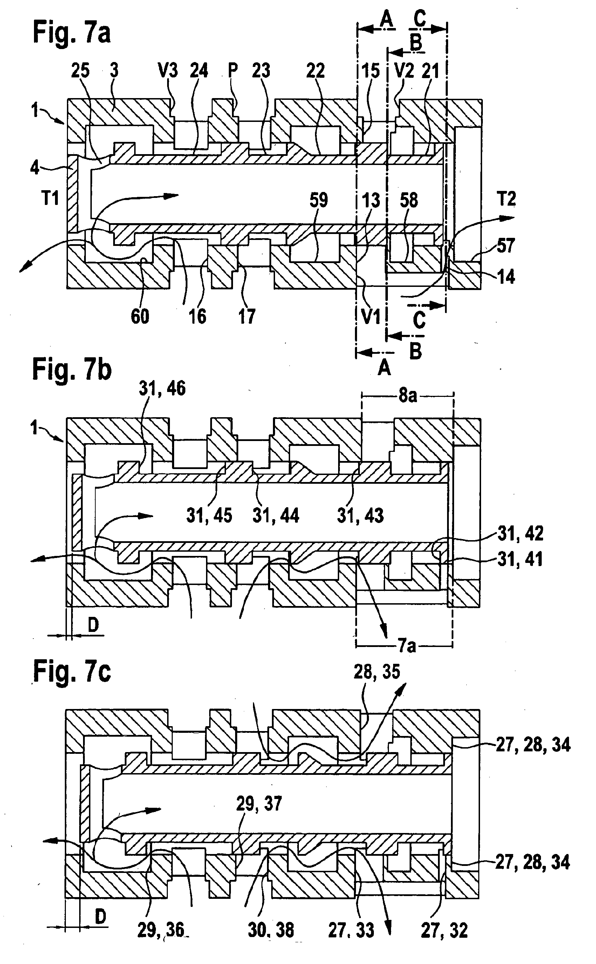

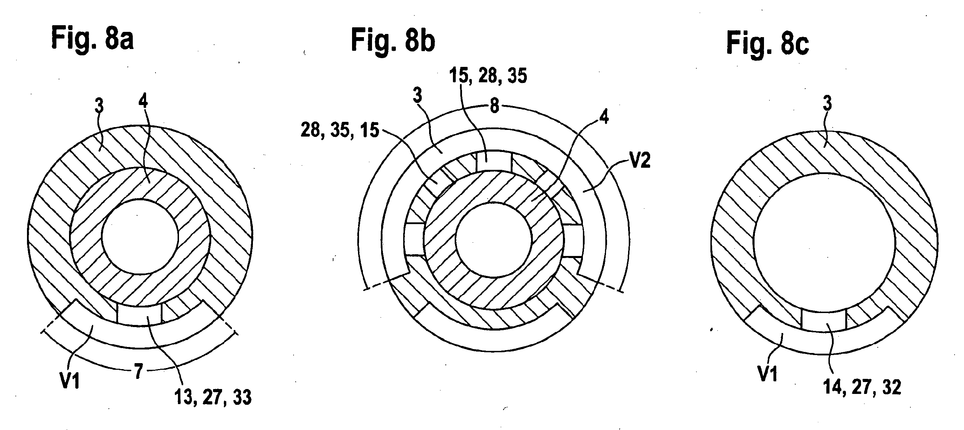

Die Figur 7a zeigt eine weitere Ausführungsform eines erfindungsgemäßen Steuerventils 1. Analog der Darstellung 3a der ersten Ausführungsform ist ausschließlich das Ventilgehäuse 3 und der Steuerkolben 4 im Bereich der Versorgungsanschlüsse V1-V3 und des Zulaufanschlusses P dargestellt. Der im Wesentlichen hohlzylindrisch ausgebildete Steuerkolben 4 ist axial verschiebbar innerhalb des ebenfalls im Wesentlichen hohlzylindrisch ausgeführten Ventilgehäuses 3 angeordnet. Dabei ist der Außendurchmesser des Steuerkolbens 4 im Wesentlichen dem Innendurchmesser des Ventilgehäuses 3 angepasst. Mittels einer nicht dargestellten Stößelstange, kann eine Bewegung eines nicht dargestellten Ankers der Stelleinheit 2 auf den Steuerkolben 4 übertragen werden, wodurch dieser gegen die Kraft eines nicht dargestellten Federelementes in axialer Richtung positioniert werden kann. An dem Ventilgehäuse 3 sind drei Versorgungsanschlüsse V1, V2, V3, ein Zulaufanschluss P und ein axialer Ablaufanschluss T2 ausgebildet. Des Weiteren kann analog Figur 2 ein weiterer radialer Ablaufanschluss T1 ausgebildet sein.
Die Versorgungsanschlüsse V1, V2, V3 und der Zulaufanschluss P sind als Nuten in einer äußeren Mantelfläche des Ventilgehäuses 3 ausgebildet, welche sich in Umfangsrichtung erstrecken. Der dritte Versorgungsanschluss V3 und der Zulaufanschluss P sind axial zueinander versetzt und axial versetzt zu dem ersten und zweiten Versorgungsanschluss V1, V2 angeordnet, während der erste und der zweite Versorgungsanschluss V1, V2 in axialer Richtung überlappend angeordnet sind.
Der erste Versorgungsanschluss V1 erstreckt sich in Umfangsrichtung innerhalb eines ersten Winkelbereichs 7, während sich der zweite Versorgungsanschluss V2 in Umfangsrichtung innerhalb eines zweiten Winkelbereichs 8 erstreckt. Dabei sind die Winkelbereiche 7, 8 in Umfangsrichtung des Steuerventils 1 nicht überlappend ausgebildet (Figuren 8a-8c). Der dritte Versorgungsanschluss V3 und der Zulaufanschluss P erstrecken sich entlang des gesamten Umfangs des Ventilgehäuses 3.
Ebenso, wie in der ersten Ausführungsform ist der Einsatz einer Adapterhülse 10 denkbar, die eine Verbindung zwischen dem Steuerventil 1 und einer Umgebungskonstruktion herstellt.
An dem Ventilgehäuse 3 sind fünf Gruppen von radialen Gehäuseöffnungen 13-17 ausgebildet. Die ersten und zweiten Gehäuseöffnungen 13, 14 sind ausschließlich in dem ersten Versorgungsanschluss V1 ausgebildet und axial zueinander versetzt angeordnet. Die dritten Gehäuseöffnungen 15 sind ausschließlich in dem zweiten Versorgungsanschluss V2 ausgebildet. Die vierten Gehäuseöffnungen 16 sind ausschließlich in dem dritten Versorgungsanschluss V3 ausgebildet. Die fünften Gehäuseöffnungen 17 sind ausschließlich in dem Zulaufanschluss P ausgebildet. Mittels der Gehäuseöffnungen 13-17 kann der jeweilige Anschluss P, V1, V2, V3 mit dem Inneren des Ventilgehäuses 3 kommunizieren.
Des Weiteren sind an einer Innenmantelfläche des Ventilgehäuses 3 vier axial zueinander versetzte Gehäusenuten 57-60 und an einer Außenmantelfläche des Steuerkolbens 4 vier axial beabstandete Ringnuten 21- 24 ausgebildet. Die Ring- und die Gehäusenuten 21-24, 57-60 erstrecken sich entlang des gesamten Umfangs des Steuerkolbens 4 bzw. des Ventilgehäuses 3, wobei die zweite Ringnut 22 auch nur innerhalb des zweiten Winkelbereichs 8 oder als Axialnut innerhalb des zweiten Winkelbereichs 8 ausgebildet sein kann. Des Weiteren sind an dem Steuerkolben 4 radiale Kolbenöffnungen 25 vorgesehen, über die die vierten Gehäusenuten 60 mit dem Inneren des Steuerkolbens 4 kommuniziert.
Über den Zulaufanschluss P kann dem Inneren des Ventilgehäuses 3 Druckmittel zugeführt werden. Mittels Steuerelementen und Gegensteuerelementen können Druckmittelströme innerhalb des Steuerventils 1 zwischen verschiedenen Anschlüssen P, T1, T2, V1, V2, V3 etabliert werden. Dazu sind an einer Innenmantelfläche des Ventilgehäuses 3 erste bis vierte Steuerelemente 27-30 und an einer Außenmantelfläche des Steuerkolbens 4 Gegensteuerelemente 31 ausgebildet.
Die ersten Steuerelemente 27 umfassen drei Steuerkanten 32-34, wobei die erste und die zweite Steuerkante 32, 33 durch die in axialer Richtung am weitesten voneinander beabstandeten Bereiche der Begrenzungswandungen der ersten und zweiten Gehäuseöffnungen 13, 14 definiert sind.
Die dritte Steuerkante 34 wird durch die axiale Begrenzungswand der ersten Gehäusenut 57 definiert.
Die zweiten Steuerelemente 28 umfassen die dritte und eine vierte Steuerkante 34, 35, wobei die vierte Steuerkante 35 durch die dem Zulaufanschluss P zugewandten Bereiche der Begrenzungswandungen der dritten Gehäuseöffnungen 15 definiert ist.
Die dritten Steuerelemente 29 umfassen eine fünfte und eine sechste Steuerkante 36, 37 Die fünfte Steuerkante 36, wird durch die axiale Begrenzungswand der vierten Gehäusenut 60 und die sechste Steuerkante 37 durch die dem dritten Versorgungsanschluss V3 zugewandten Bereiche der Begrenzungswandungen der fünften Gehäuseöffnungen 17 definiert.
Die vierten Steuerelemente 30 umfassen eine siebte Steuerkante 38, wobei diese durch die den sechsten Steuerkanten 37 axial gegenüberliegenden Bereiche der Begrenzungswandungen der fünften Gehäuseöffnungen 17 definiert ist.

Die Gegensteuerelemente 31 umfassen sechs Gegensteuerkanten 41-46, wobei die erste Gegensteuerkante 41 durch das federelementseitige Ende des Steuerkolbens 4, die zweite Gegensteuerkante 42 durch die federelementseitige, axiale Begrenzungswand der ersten Ringnut 21, die dritte Gegensteuerkante 43 durch die federelementseitige axiale Begrenzungswand der zweiten Ringnut 22, die vierte Gegensteuerkante 44 durch die dem Federelement 6 abgewandte, axiale Begrenzungswand der dritten Ringnut 23 und die fünfte und sechste Gegensteuerkante 45, 46 durch die axialen Begrenzungswände der vierten Ringnut 24 definiert sind.

Die erste und die zweite Steuerkante 32, 33 sind ausschließlich im ersten Winkelbereich 7 ausgebildet. Die vierte Steuerkante 35 ist ausschließlich im zweiten Winkelbereich 8 ausgebildet. Die dritte und fünfte bis siebte Steuerkante 34, 36-38 sind entlang des gesamten Innenumfangs des Ventilgehäuses 3 ausgebildet. Die Gegensteuerelemente 31 erstrecken sich entlang des gesamten Umfangs des Steuerkolbens 4.

Die in dieser Ausführungsform eines Steuerventils 1 realisierten Steuerlogik entsprich der in Figur 5 dargestellten mit der Ausnahme, dass in der fünften Steuerstellung S5 alle Versorgungsanschlüsse V1-V3 mit dem Zulaufanschluss P kommunizieren.
Die verschiedenen Steuerstellungen S1-S7 des Steuerventils 1 sind in den Figuren 7a-7e dargestellt. Im Unterschied zu der in Figur 7a dargestellten Ausführungsform sind in den Figuren 7b-7e der zweite Versorgungsanschluss V2 durch die dritten Gehäuseöffnungen 15 realisiert.
Über den Zulaufanschluss P kann dem Steuerventil 1 Druckmittel zugeführt werden, welches über die fünften Gehäuseöffnungen 17 in das Innere des Ventilgehäuses 3 gelangt. In der ersten bis fünften Steuerstellung S1-S5 gelangt somit Druckmittel in die dritte Ringnut 23. In der zweiten bis fünften Steuerstellung S2-S5 gelangt zusätzlich Druckmittel von der dritten Ringnut 23, über die dritte Gehäusenut 59, in die zweite Ringnut 22. In der fünften bis siebten Steuerstellung S5-S7 gelangt das vom Zulaufanschluss P gelieferte Druckmittel in die vierte Ringnut 24.

In Figur 7a ist Steuerventil 1 in der ersten Steuerstellung S1 dargestellt. In dieser Steuerstellung S1 gelangt Druckmittel über die fünfte Gehäuseöffnung 17 ausschließlich in die dritte Ringnut 23, während ein Druckmittelfluss in die zweite bzw. vierte Ringnut 22, 24 von dem Steuerkolben 4 blockiert ist. Des Weiteren ist die erste Gehäuseöffnung 13 ebenfalls vom Steuerkolben 4 blockiert. Somit kommuniziert keiner der Versorgungsanschlüsse V1-V3 mit dem Zulaufanschluss P.
Die erste Steuerkante 32 gibt in Verbindung mit der ersten Gegensteuerkante 41 eine Verbindung zwischen der zweiten Gehäuseöffnung 14 und der ersten Gehäusenut 57 frei. Druckmittel kann somit vom ersten Versorgungsanschluss V1 zum axialen Ablaufanschluss T2 abfließen. Zusätzlich gibt die fünfte Steuerkante 36 in Verbindung mit der sechsten Gegensteuerkante 46 eine Verbindung zwischen der vierten Gehäuseöffnung 16 und der vierten Gehäusenut 60 frei. Druckmittel kann somit von dem dritten Versorgungsanschluss V3 zu einem eventuell vorhandenen radialen Ablaufanschluss T1 oder über die ersten Kolbenöffnungen 25 zum axialen Ablaufanschluss T2 abfließen.
Gleichzeitig ist eine Verbindung zwischen dem zweiten Versorgungsanschluss V2 und dem axialen Ablaufanschluss T2 von dem Steuerkolben 4 blockiert, wodurch dieser weder mit einem Ablaufanschluss T1, T2 noch mit dem Zulaufanschluss P kommuniziert.
Beim Übergang zu der in Figur 7b dargestellten, zweiten Steuerstellung S2 des Steuerventils 1 gibt der Steuerkolben 4 eine Verbindung zwischen der dritten und der zweiten Ringnut 23, 22 über die dritte Gehäusenut 59 frei. Gleichzeitig gibt die zweite Steuerkante 33 in Verbindung mit der dritten Gegensteuerkante 43 eine Verbindung zwischen der zweiten Ringnut 22 und der ersten Gehäuseöffnung 13 frei. Zusätzlich blockiert der Steuerkolben 4 die Verbindung zwischen der zweiten Gehäuseöffnung 14 und der ersten Gehäusenut 57. Druckmittel gelangt somit vom Zulaufanschluss P zum ersten Versorgungsanschluss V1, wobei es gleichzeitig daran gehindert wird zum axialen Ablaufanschluss T2 abzufließen.
Gleichzeitig versperrt der Steuerkolben 4 eine Verbindung zwischen dem ersten Versorgungsanschluss V1 und der zweiten Gehäusenut 58.

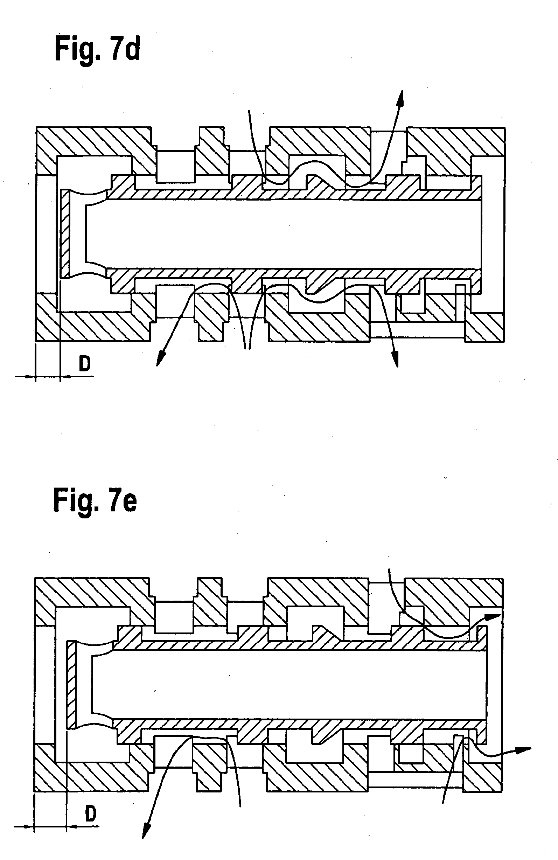

Beim Übergang zu der in Figur 7c dargestellten, dritten Steuerstellung S3 des Steuerventils 1 gibt die vierte Steuerkante 35 in Verbindung mit der dritten Gegensteuerkante 43 eine Verbindung zwischen der dritten Gehäuseöffnung 15 und der zweiten Ringnut 22 frei, wodurch Druckmittel vom Zulaufanschluss P zum zweiten Versorgungsanschluss V2 gelangt.
Bei einer weiteren Verschiebung D des Steuerkolbens 4, in die vierte Steuerstellung S4, schließt zunächst die fünfte Steuerkante 36 in Verbindung mit der sechsten Gegensteuerkante 46 die Verbindung zwischen der vierten Gehäuseöffnung 16 und der vierten Gehäusenut 60, wodurch der dritte Versorgungsanschluss V3 weder mit einem der Ablaufanschlüsse T1, T2 noch mit dem Zulaufanschluss P kommuniziert.
Bei weiterer Verschiebung D des Steuerkolbens 4 geht das Steuerventil 1 in die in Figur 7d dargestellte fünfte Steuerstellung S5 über. Dabei gibt die sechste Steuerkante 37 in Verbindung mit der fünften Gegensteuerkante 45 eine Verbindung zwischen der fünften Gehäuseöffnung 17 und der vierten Ringnut 24 frei, wodurch Druckmittel vom Zulaufanschluss P zum dritten Versorgungsanschluss V3 gelangt.
Eine weitere Verschiebung D des Steuerkolbens 4, in die sechste Steuerstellung S6, bewirkt, dass die Verbindung zwischen der fünften Gehäuseöffnung 17 und der dritten Ringnut 23 mittels der siebten Steuerkante 38 in Verbindung mit der vierten Gegensteuerkante 44 blockiert wird. Somit sind der erste und der zweite Versorgungsanschluss V2 weder mit einem der Ablaufanschlüsse T1, T2 noch mit dem Zulaufanschluss P verbunden.
Beim Übergang zu der in Figur 7e dargestellten, siebten Steuerstellung S7 des Steuerventils 1, gibt die dritte Steuerkante 34, in Verbindung mit der zweiten Gegensteuerkante 42, eine Verbindung zwischen der zweiten bzw. dritten Gehäuseöffnung 14, 15 und der ersten Gehäusenut 57 frei. Druckmittel kann vom ersten bzw. zweiten Versorgungsanschluss V1, V2 über die zweite bzw. dritte Gehäuseöffnung 14, 15 und die erste Ringnut 21 zum axialen Ablaufanschluss T2 gelangen.

### Bezugszeichen

- 1: Steuerventil
- 2: Stelleinheit
- 3: Ventilgehäuse
- 4: Steuerkolben
- 5: Stößelstange
- 6: Federelement
- 7: erster Winkelbereich
- 7a: erster Bereich
- 8: zweiter Winkelbereich
- 8a: zweiter Bereich
- 9: Sperrelement
- 10: Adapterhülse
- 11: Nut
- 12: Hülsenöffnung
- 13: erste Gehäuseöffnung
- 14: zweite Gehäuseöffnung
- 15: dritte Gehäuseöffnung
- 16: vierte Gehäuseöffnung
- 17: fünfte Gehäuseöffnung
- 18: sechste Gehäuseöffnung
- 19: siebte Gehäuseöffnung
- 20: achte Gehäuseöffnung
- 21: erste Ringnut
- 22: zweite Ringnut
- 23: dritte Ringnut
- 24: vierte Ringnut
- 25: erste Kolbenöffnung
- 26: zweite Kolbenöffnung
- 27: erstes Steuerelement
- 28: zweites Steuerelement
- 29: drittes Steuerelement
- 30: viertes Steuerelement
- 31: Gegensteuerelement
- 32: erste Steuerkante
- 33: zweite Steuerkante
- 34: dritte Steuerkante
- 35: vierte Steuerkante
- 36: fünfte Steuerkante
- 37: sechste Steuerkante
- 38: siebte Steuerkante
- 39: achte Steuerkante
- 40: neunte Steuerkante
- 41: erste Gegensteuerkante
- 42: zweite Gegensteuerkante
- 43: dritte Gegensteuerkante
- 44: vierte Gegensteuerkante
- 45: fünfte Gegensteuerkante
- 46: sechste Gegensteuerkante
- 47: siebte Gegensteuerkante
- 48: Nockenwellenversteller
- 49: Außenrotor
- 50: Innenrotor
- 51: Druckraum
- 52: Flügel
- 53: erste Druckkammer
- 54: zweite Druckkammer
- 55: Verriegelungsmechanismus
- 56: Verriegelungsstift
- 57: erste Gehäusenut
- 58: zweite Gehäusenut
- 59: dritte Gehäusenut
- 60: vierte Gehäusenut
- D: Verschiebeweg
- P: Zulaufanschluss
- T1: radialer Ablaufanschluss
- T2: axialer Ablaufanschluss
- V1: erster Versorgungsanschluss
- V2: zweiter Versorgungsanschluss
- V3: dritter Versorgungsanschluss

## Patentansprüche

1. Hydraulisches Steuerventil (1) für eine Vorrichtung zur variablen Einstellung der Steuerzeiten von Gaswechselventilen einer Brennkraftmaschine mit einer mit dem hydraulischen Steuerventil (1) verbundenen oder ortsfest zu diesem angeordneten elektromagnetischen Stelleinheit und
• mit einem hohlzylindrisch ausgebildeten Ventilgehäuse (3),
• an dem ein Zulaufanschluss (P), mindestens ein Ablaufanschluss (T1, T2), und mindestens zwei Versorgungsanschlüsse (V1, V2, V3) ausgebildet sind,
• und einem innerhalb des Ventilgehäuses (3) angeordneten, axial zu diesem verschiebbaren Steuerkolben (4),
• wobei der Steuerkolben mittels der elektromagnetischen Stelleinheit in eine beliebige Position zwischen zwei Maximalwerten verschoben und gehalten werden kann,
• wobei an einer zylinderförmigen Mantelfläche eines der beiden Bauteile innerhalb eines ersten, sich in axialer und Umfangsrichtung erstreckenden Bereichs (7a) erste Steuerelemente (27) und innerhalb eines zweiten, sich in axialer und Umfangsrichtung erstreckenden Bereichs (8a) zweite Steuerelemente (28) ausgebildet sind,
• wobei an dem anderen Bauteil Gegensteuerelemente (31) ausgebildet sind,
• wobei die ersten Steuerelemente (27) mit den Gegensteuerelementen (31) derart zusammenwirken, dass, abhängig von der axialen Stellung der Bauteile zueinander, ein Druckmittelstrom zwischen dem ersten Versorgungsanschluss (V3) und dem Inneren des Ventilgehäuses (3) gesteuert wird,
• wobei die zweiten Steuerelemente (28) mit den Gegensteuerelementen (31) derart zusammenwirken, dass, abhängig von der axialen Stellung der Bauteile zueinander, ein Druckmittelstrom zwischen dem zweiten Versorgungsanschluss (V2) und dem Inneren des Ventilgehäuses (3) gesteuert wird, **dadurch gekennzeichnet, dass**
• der erste und der zweite Bereich (7a, 8a) in axialer Richtung überlappend angeordnet sind.

2. Steuerventil (1) nach Anspruch 1, **dadurch gekennzeichnet, dass** der erste Bereich (7a) sich in Umfangsrichtung des Steuerventils (1) innerhalb eines ersten Winkelbereichs (7) erstreckt und dass der zweite Bereich (8a) sich in Umfangsrichtung des Steuerventils (1) innerhalb eines zweiten Winkelbereichs (8) erstreckt, wobei die Bereiche (7a, 8a) sich in Umfangsrichtung nicht überlappen.

3. Steuerventil (1) nach Anspruch 1, **dadurch gekennzeichnet, dass** die Steuerelemente (27-30) an dem Ventilgehäuses (3) ausgebildet sind.

4. Steuerventil (1) nach Anspruch 1, **dadurch gekennzeichnet, dass** die Steuerelemente (27-30) an einer Innenmantelfläche des Ventilgehäuses (3) ausgebildet sind.

5. Steuerventil (1) nach Anspruch 1, **dadurch gekennzeichnet, dass** die ersten Steuerelemente (27) mit den Gegensteuerelementen (31) derart zusammenwirken, dass, abhängig von der axialen Stellung der Bauteile zueinander, ausschließlich ein Druckmittelstrom zwischen dem ersten Versorgungsanschluss (V1) und dem Inneren des Ventilgehäuses (3) gesteuert wird.

6. Steuerventil (1) nach Anspruch 1, **dadurch gekennzeichnet, dass** die zweiten Steuerelemente (28) mit den Gegensteuerelementen (31) derart zusammenwirken, dass, abhängig von der axialen Stellung der Bauteile zueinander, ausschließlich ein Druckmittelstrom zwischen dem zweiten Versorgungsanschluss (V2) und dem Inneren des Ventilgehäuses (3) gesteuert wird.

7. Steuerventil (1) nach Anspruch 1,
**dadurch gekennzeichnet, dass** zwei der Anschlüsse (P, T1, T2, V1, V2) in axialer Richtung des Ventilgehäuses (3) überlappend angeordnet sind.

8. Steuerventil (1) nach Anspruch 7, **dadurch gekennzeichnet, dass** die Versorgungsanschlüsse (V1, V2) in axialer Richtung des Ventilgehäuses (3) überlappend angeordnet sind.

9. Steuerventil (1) nach Anspruch 7, **dadurch gekennzeichnet, dass** sich die in axialer Richtung überlappenden Anschlüsse (P, T1, T2, V1, V2) in Umfangsrichtung des Ventilgehäuses (3) nicht überlappen.

10. Steuerventil (1) nach Anspruch 7, **dadurch gekennzeichnet, dass** die in axialer Richtung überlappenden Anschlüsse (P, T1, T2, V1, V2) in Umfangsrichtung des Ventilgehäuses (3) mittels Sperrelementen (9) hydraulisch voneinander getrennt sind.

11. Steuerventil (1) nach Anspruch 10, **dadurch gekennzeichnet, dass** die Sperrelemente (9) einteilig mit dem Ventilgehäuses (3) ausgebildet sind.

## Claims

1. Hydraulic control valve (1) for an apparatus for the variable setting of the control times of gas exchange valves of an internal combustion engine having an electromagnetic actuating unit which is connected to the hydraulic control valve (1) or is arranged in a stationary manner with respect thereto, and
• having a valve housing (3) of hollow-cylindrical configuration,
• on which an inflow connector (P), at least one outflow connector (T1, T2) and at least two supply connectors (V1, V2, V3) are formed,
• and having a control piston (4) which is arranged inside the valve housing (3) and can be displaced axially with respect thereto,
• it being possible for the control piston to be displaced and held by means of the electromagnetic actuating unit into any desired position between two maximum values,
• on a cylindrical circumferential face of one of the two components, first control elements (27) being formed within a first region (7a) which extends in the axial direction and circumferential direction and second control elements (28) being formed within a second region (8a) which extends in the axial direction and circumferential direction,
• corresponding control elements (31) being formed on the other component,
• the first control elements (27) interacting with the corresponding control elements (31) in such a way that, depending on the axial position of the components with respect to one another, a pressure-medium flow between the first supply connector (V3) and the interior of the .valve housing (3) is controlled,
• the second control elements (28) interacting with the corresponding control elements (31) in such a way that, depending on the axial position of the components with respect to one another, a pressure-medium flow between the second supply connector (V2) and the interior of the valve housing (3) is controlled, **characterized in that**
• the first and the second region (7a, 8a) are arranged so as to overlap in the axial direction.

2. Control valve (1) according to Claim 1, **characterized in that** the first region (7a) extends in the circumferential direction of the control valve (1) within a first angular region (7), and **in that** the second region (8a) extends in the circumferential direction of the control valve (1) within a second angular region (8), the regions (7a, 8a) not overlapping in the circumferential direction.

3. Control valve (1) according to Claim 1, **characterized in that** the control elements (27-30) are formed on the valve housing (3).

4. Control valve (1) according to Claim 1, **characterized in that** the control elements (27-30) are formed on an inner circumferential face of the valve housing (3).

5. Control valve (1) according to Claim 1, **characterized in that** the first control elements (27) interact with the corresponding control elements (31) in such a way that, depending on the axial position of the components with respect to one another, exclusively a pressure-medium flow between the first supply connector (V1) and the interior of the valve housing (3) is controlled.

6. Control valve (1) according to Claim 1, **characterized in that** the second control elements (28) interact with the corresponding control elements (31) in such a way that, depending on the axial position of the components with respect to one another, exclusively a pressure-medium flow between the second supply connector (V2) and the interior of the valve housing (3) is controlled.

7. Control valve (1) according to Claim 1, **characterized in that** two of the connectors (P, T1, T2, V1, V2) are arranged so as to overlap in the axial direction of the valve housing (3).

8. Control valve (1) according to Claim 7, **characterized in that** the supply connectors (V1, V2) are arranged so as to overlap in the axial direction of the valve housing (3).

9. Control valve (1) according to Claim 7, **characterized in that** the connectors (P, T1, T2, V1, V2) which overlap in the axial direction do not overlap in the circumferential direction of the valve housing (3).

10. Control valve (1) according to Claim 7, **characterized in that** the connectors (P, T1, T2, V1, V2) which overlap in the axial direction are separated hydraulically from one another in the circumferential direction of the valve housing (3) by means of barrier elements (9).

11. Control valve (1) according to Claim 10, **characterized in that** the barrier elements (9) are configured in one piece with the valve housing (3).

## Revendications

1. Soupape de commande hydraulique (1) pour un dispositif pour l'ajustement variable des temps de commande de soupapes d'échange de gaz d'un moteur à combustion interne comprenant une unité de commande électromagnétique connectée à la soupape de commande hydraulique ou disposée fixement par rapport à celle-ci et
- comprenant un boîtier de soupape (3) réalisé sous forme cylindrique creuse,
- sur lequel sont réalisés un raccord d'entrée (P), au moins un raccord de sortie (T1, T2), et au moins deux raccords d'alimentation (V1, V2, V3),
- et un piston de commande (4) disposé à l'intérieur du boîtier de soupape (3) et déplaçable axialement par rapport à celui-ci,
- le piston de commande pouvant être déplacé et maintenu au moyen de l'unité de commande électromagnétique dans une position quelconque entre deux valeurs maximales,
- des premiers éléments de commande (27) étant réalisés sur une surface d'enveloppe cylindrique de l'un des deux composants à l'intérieur d'une première région (7a) s'étendant dans la direction axiale et dans la direction périphérique et des deuxièmes éléments de commande (28) étant réalisés à l'intérieur d'une deuxième région (8a) s'étendant dans la direction axiale et dans la direction périphérique,
- des éléments de commande conjugués (31) étant réalisés sur l'autre composant,
- les premiers éléments de commande (27) coopérant avec les éléments de commande conjugués (31), de telle sorte qu'en fonction de la position axiale des composants l'un par rapport à l'autre, un courant de fluide sous pression soit commandé entre le premier raccord d'alimentation (V3) et l'intérieur du boîtier de soupape (3),
- les deuxièmes éléments de commande (28) coopérant avec les éléments de commande conjugués (31) de telle sorte qu'en fonction de la position axiale des composants l'un par rapport à l'autre, un courant de fluide sous pression soit commandé entre le deuxième raccord d'alimentation (V2) et l'intérieur du boîtier de soupape (3), **caractérisée en ce que**
- la première et la deuxième région (7a, 8a) sont disposées de manière à se chevaucher dans la direction axiale.

2. Soupape de commande (1) selon la revendication 1, **caractérisée en ce que** la première région (7a) s'étend dans la direction périphérique de la soupape de commande (1) à l'intérieur d'une première région angulaire (7) et **en ce que** la deuxième région (8a) s'étend dans la direction périphérique de la soupape de commande (1) à l'intérieur d'une deuxième région angulaire (8), les régions (7a, 8a) ne se chevauchant pas dans la direction périphérique.

3. Soupape de commande (1) selon la revendication 1, **caractérisée en ce que** les éléments de commande (27-30) sont réalisés sur le boîtier de soupape (3).

4. Soupape de commande (1) selon la revendication 1, **caractérisée en ce que** les éléments de commande (27-30) sont réalisés sur une surface d'enveloppe intérieure du boîtier de soupape (3).

5. Soupape de commande (1) selon la revendication 1, **caractérisée en ce que** les premiers éléments de commande (27) coopèrent avec les éléments de commande conjugués (31) de telle sorte qu'en fonction de la position axiale des composants l'un par rapport à l'autre, exclusivement un courant de fluide sous pression soit commandé entre le premier raccord d'alimentation (V1) et l'intérieur du boîtier de soupape (3).

6. Soupape de commande (1) selon la revendication 1, **caractérisée en ce que** les deuxièmes éléments de commande (28) coopèrent avec les éléments de commande conjugués (31), de telle sorte qu'en fonction de la position axiale des composants l'un par rapport à l'autre, exclusivement un courant de fluide sous pression soit commandé entre le deuxième raccord d'alimentation (V2) et l'intérieur du boîtier de soupape (3).

7. Soupape de commande (1) selon la revendication 1, **caractérisée en ce que** deux des raccords (P, T1, T2, V1, V2) sont disposés de manière à se chevaucher dans la direction axiale du boîtier de soupape (3).

8. Soupape de commande (1) selon la revendication 7, **caractérisée en ce que** les raccords d'alimentation (V1, V2) sont disposés de manière à se chevaucher dans la direction axiale du boîtier de soupape (3).

9. Soupape de commande (1) selon la revendication 7, **caractérisée en ce que** les raccords (P, T1, T2, V1, V2) se chevauchant dans la direction axiale ne se chevauchent pas dans la direction périphérique du boîtier de soupape (3).

10. Soupape de commande (1) selon la revendication 7, **caractérisée en ce que** les raccords (P, T1, T2, V1, V2) se chevauchant dans la direction axiale sont séparés hydrauliquement les uns des autres dans la direction périphérique du boîtier de soupape (3) au moyen d'éléments de blocage (9).

11. Soupape de commande (1) selon la revendication 10, **caractérisée en ce que** les éléments de blocage (9) sont réalisés d'une seule pièce avec le boîtier de soupape (3).
